# EUROPEAN PATENT SPECIFICATION

(11) **EP 4 170 769 B1**
(45) Date of publication and mention of the grant of the patent: **24.06.2026**
(21) Application number: 21911615.9
(22) Date of filing: 24.12.2021
(51) Int. Cl.: H01M 10/0565, H01M 10/0567, H01M 10/052, H01M 10/0525, H01M 10/0568, H01M 10/0569

(54) **COMPOSITION FOR ELECTROLYTE OF LITHIUM SECONDARY BATTERY, GEL POLYMER ELECTROLYTE, AND LITHIUM SECONDARY BATTERY INCLUDING GEL POLYMER ELECTROLYTE**
ZUSAMMENSETZUNG FÜR LITHIUMSEKUNDÄRBATTERIEELELEKTROLYT, GELPOLYMERELEKTROLYT UND LITHIUMSEKUNDÄRBATTERIE ENTHALTEND GELPOLYMERELEKTROLYT
COMPOSITION POUR ÉLECTROLYTE DE BATTERIE SECONDAIRE AU LITHIUM, ÉLECTROLYTE POYMÈRE EN GEL ET BATTERIE SECONDAIRE AU LITHIUM COMPRENANT UN ÉLECTROLYTE POLYMÈRE EN GEL

(30) Priority: 24.12.2020 KR 20200183052; 24.12.2020 KR 20200183053
(43) Date of publication of application: 26.04.2023
(73) Proprietor: LG Energy Solution, Ltd., Seoul 07335 (KR)
(72) Inventor: SHIN, Won Kyung, Daejeon 34122 (KR); LEE, Chul Haeng, Daejeon 34122 (KR); AHN, Kyoung Ho, Daejeon 34122 (KR); KIM, Min Jung, Daejeon 34122 (KR); PARK, Sol Ji, Daejeon 34122 (KR); HAN, Jun Hyeok, Daejeon 34122 (KR); LEE, Won Tae, Daejeon 34122 (KR); JI, Su Hyeon, Daejeon 34122 (KR)
(74) Representative: Hoffmann Eitle
(86) International application number: PCT/KR2021/019838
(87) International publication number: WO 2022/139550

(56) References cited:
- EP-A1- 3 654 436
- JP-B2- 6 481 120
- KR-A- 20170 044 136
- KR-A- 20200 020 169
- KR-A- 20200 052 241
- US-A1- 2013 075 666

## Description

### TECHNICAL FIELD

The present application claims priority from Korean Patent Application Nos. 10-2020-0183052, filed on December 24, 2020, and 10-2020-0183053, filed on December 24, 2020, in the Korean Intellectual Property Office.

The present invention relates to a composition for an electrolyte of a lithium secondary battery, a gel polymer electrolyte including a polymerization product thereof, and a lithium secondary battery including the gel polymer electrolyte.

### BACKGROUND ART

The application of a lithium secondary battery, which uses a principle in which electricity is generated or consumed by an oxidation/reduction reaction caused by intercalation and de-intercalation of lithium ions in a negative electrode and a positive electrode, is rapidly expanding not only as a portable power source for a mobile phone, a notebook computer, a digital camera, a camcorder, and the like but also as a medium-and-large-sized power source for a power tool, an electric bicycle, a hybrid electric vehicle (HEV), a plug-in HEV (PHEV), and the like. In accordance with the expansion of the application fields and the increase in demand thereof, the external shape and size of the battery are variously changed, and performance and stability which are more excellent than those required in conventional small batteries are required.

An ion conductive non-aqueous electrolyte solution in which a salt is dissolved in a non-aqueous organic solvent is mainly used, but the non-aqueous electrolyte solution has a disadvantage in that there is a high possibility that an electrode material is deteriorated and an organic solvent is volatilized and in that safety is low due to combustion caused by an increase in ambient temperature and the temperature of a battery itself.

Accordingly, there is a demand for the development of an electrolyte for a lithium secondary battery in which both performance and safety are ensured by compensating for these shortcomings.

EP 3 654 436 A1 discloses a composition for a gel polymer electrolyte, including an oligomer, a polymerization inhibitor, a non-aqueous solvent, and a lithium salt, and discloses a gel polymer electrolyte and a lithium secondary battery including the same.

### DISCLOSURE OF THE INVENTION

### TECHNICAL PROBLEM

An aspect of the present invention provides a composition for an electrolyte of a lithium secondary battery with improved lifespan properties and safety, a gel polymer electrolyte including a polymerization product thereof, and a lithium secondary battery including the gel polymer electrolyte.

### TECHNICAL SOLUTION

According to an aspect of the present invention, there is provided a composition for an electrolyte of a lithium secondary battery, the composition including
a lithium salt, a polyalkylene carbonate-based polymer including a unit represented by Formula 1 below and having a weight average molecular weight of 1,000 g/mol to 1,500,000 g/mol, and an organic solvent, wherein
in addition, the composition either includes lithium difluoro(oxalato)borate and lithium bis(oxalato)borate at a weight ratio of 1:5 to 5:1, or includes a compound represented by Formula 3-1 below in an amount of 0.01 wt% to 5 wt% and a compound represented by Formula 3-2 below in an amount of 0.01 wt% to 10 wt% based on the total weight of the composition.

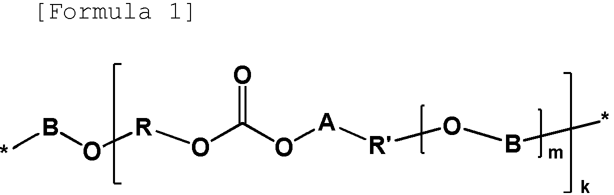

In Formula 1 above,
R and R' are the same as or different from each other and are each independently an alkylene group having 1 to 5 carbon atoms,
A is a unit represented by Formula 2 below,
B is a unit including one or more amide groups,
* is a site connected to a main chain or an end group of a polymer, and
m and k are repetition numbers, wherein
m is an integer of any one of 1 to 1,000, and
k is an integer of any one of 1 to 100.

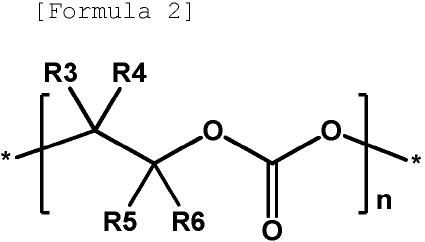

In Formula 2 above,
R3 to R6 are the same as or different from each other and are each independently hydrogen, or an alkyl group having 1 to 5 carbon atoms,
* is a site connected to a main chain or an end group of a polymer, and
n is a repetition number and an integer of any one of 1 to 1,000.

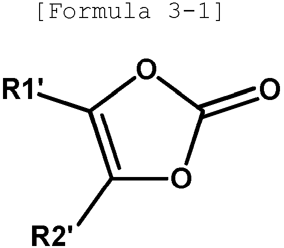

In Formula 3-1 above,
R1' and R2' are the same as or different from each other and are each independently hydrogen, or a vinyl group.

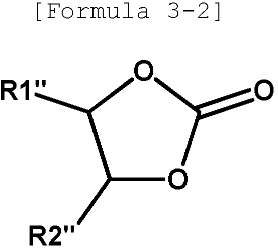

In Formula 3-2 above,
R1" and R2" are the same as or different from each other and are each independently hydrogen or a halogen group, and at least one of R1" and R2" is a halogen group.

According to another aspect of the present invention, there is provided a gel polymer electrolyte for a lithium secondary battery including a polymerization product of the composition for an electrolyte of a lithium secondary battery.

According to another aspect of the present invention, there is provided a lithium secondary battery including a positive electrode including a positive electrode active material, a negative electrode including a negative electrode active material, a separator interposed between the positive electrode and the negative electrode, and the gel polymer electrolyte for a lithium secondary battery.

### ADVANTAGEOUS EFFECTS

A composition for an electrolyte according to the present invention includes a polymer containing a polycarbonate group as a main chain repeating unit, and thus, has excellent affinity with a non-aqueous organic solvent. Therefore, when an electrolyte is manufactured using the composition, the surface tension is lowered to improve wetting of the electrolyte in a battery, thereby increasing ion conductivity, and ultimately, a lithium secondary battery including the electrolyte of the present invention may have improved lifespan properties at high temperatures.

In addition, the composition for an electrolyte includes two or more types of lithium salt additives, so that a film serving as a protective layer may be formed on the surface of a positive electrode, and accordingly, there is an effect of improving durability; or the composition for an electrolyte includes two or more types of carbonate-based compounds as additives, so that a robust SEI LAYER may be formed on the surface of a negative electrode, and thus, the durability of the battery may be improved.

That is, by the combination of the polymer and the additives, ultimately, the lithium secondary battery including the electrolyte of the present invention may have improved lifespan properties at room temperature and low temperatures.

In addition, the polycarbonate-based polymer forms a thermally stable film on the surface of the positive electrode, and thus, may suppress a side reaction between the positive electrode and the electrolyte during high-temperature exposure, so that heat generation caused by the side reaction may be reduced to prevent thermal runaway, and the possibility of battery ignition may be lowered.

### BEST MODE FOR CARRYING OUT THE INVENTION

Hereinafter, the present invention will be described in more detail.

In the present invention, unless otherwise stated, a molecular weight means a weight average molecular weight, and the weight average molecular weight is measured by Gel Permeation Chromatography (GPC). Specifically, the measurement was performed at a flow rate of 1.0 mL/min and a sample concentration of 1 mg/mL by using WATERS STYRAGEL HR3/HR4 (THF) as a column and tetrahydrofuran (THF) (used by filtering at 0.45 m) as a solvent. 100 µL of the sample was injected, and the column temperature was set to 40°C. Waters RI detector was used as a detector, and polystyrene (PS) was set as a standard. Data processing was performed through the Empower3 program.

A composition for an electrolyte of the present invention includes a lithium salt, a polyalkylene carbonate-based polymer, an organic solvent, and an additive to be described later.

Hereinafter, each component of the composition for an electrolyte will be described in more detail.

### (a) Polyalkylene carbonate-based polymer

An electrolyte including a typical non-aqueous organic solvent has poor wetting and ion transport capacity, but in the present invention, an electrolyte is manufactured from a composition containing a polyalkylene carbonate-based polymer, and thus, wetting and ion transport capacity may be improved.

In an embodiment of the present invention, the amount of the polyalkylene carbonate-based polymer may be in a range of 0.1 wt% to 5 wt%, preferably 0.25 wt% to 5 wt%, most preferably 0.5 wt% to 5 wt% based on the total weight of the composition for an electrolyte.

When the amount of the polyalkylene carbonate-based polymer is in the above range, it is preferable in terms of mechanical physical properties, ion conductivity, and viscosity. Specifically, when the amount of the polyalkylene carbonate-based polymer is less than 0.1 wt%, an effect to be achieved by the polymer input is insignificant, and when greater than 5 wt%, the polymer in an excessive amount may not only inhibit the activity of an electrode surface but also make it difficult to dissolve the lithium salt.

The polyalkylene carbonate-based first polymer includes a unit represented by Formula 1 below.

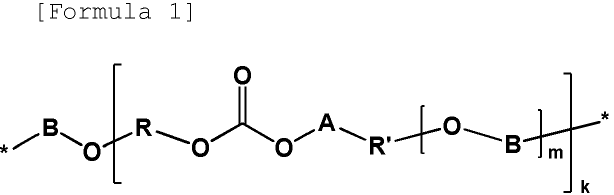

In Formula 1 above,
R and R' are the same as or different from each other and are each independently an alkylene group having 1 to 5 carbon atoms,
A is a unit represented by Formula 2 below,
B is a unit including one or more amide groups,
* is a site connected to a main chain or an end group of a polymer, and
m and k are repetition numbers, wherein
m is an integer of any one of 1 to 1,000, and
k is an integer of any one of 1 to 100.

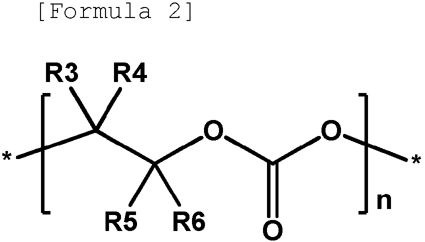

In Formula 2 above,
R3 to R6 are the same as or different from each other and are each independently hydrogen, or an alkyl group having 1 to 5 carbon atoms,
* is a site connected to a main chain or an end group of a polymer, and
n is a repetition number and an integer of any one of 1 to 1,000.

The amide group means a group represented by

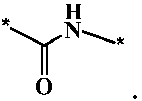

Preferably, R3 to R6 of Formula 2 above may each be hydrogen.

In addition, preferably, the n may be an integer of any one of 1 to 500, and most preferably, an integer of any one of 1 to 200.

In an embodiment of the present invention, B of Formula 1 above may be represented by Formula B-1 below.

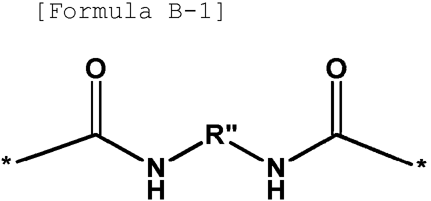

In Formula B-1 above,
R" is a substituted or unsubstituted alkylene group having 1 to 10 carbon atoms, a substituted or unsubstituted cycloalkylene group having 3 to 10 carbon atoms, a substituted or unsubstituted bicycloalkylene group having 6 to 20 carbon atoms, or a substituted or unsubstituted arylene group having 6 to 20 carbon atoms.

Specifically, the R" may be any one selected from Formulas R"-1 to R"-6 below.

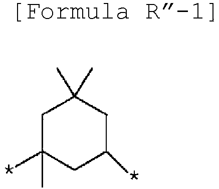

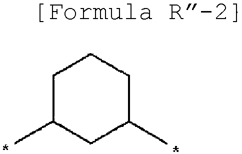

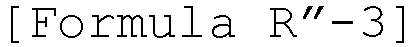

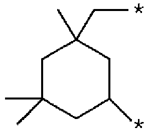

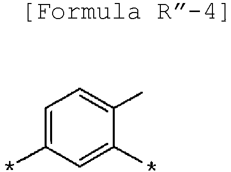

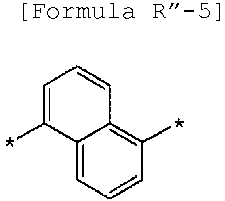

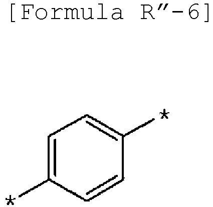

In Formulas R"-1 to R"-6 above, * is a site connected to a main chain or an end group of a polymer.

Both end groups of the polyalkylene carbonate-based polymer of the present invention are the same as or different from each other, and may each independently be an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group. Specifically, the end group is a vinyl group or a (meth)acrylate group.

In addition, the end group may be represented by any one of Formulas E-1 to E-6 below. In this case, the end group may react with a polymerization initiator to cause a polymer cross-linking reaction.

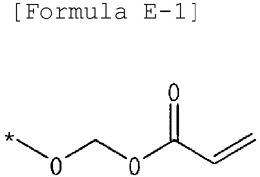

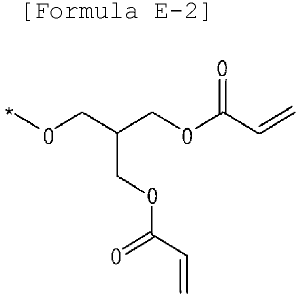

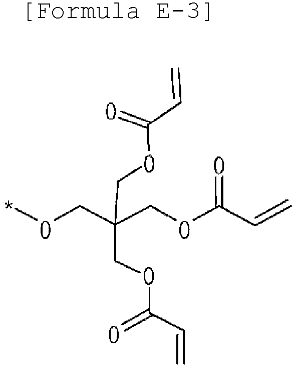

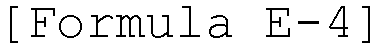

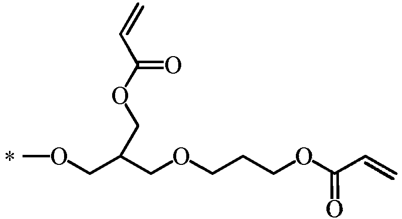

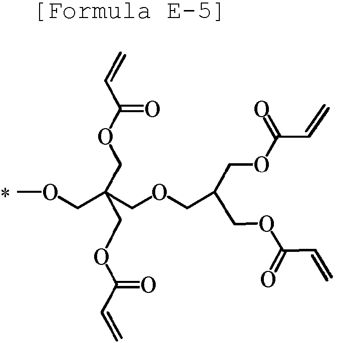

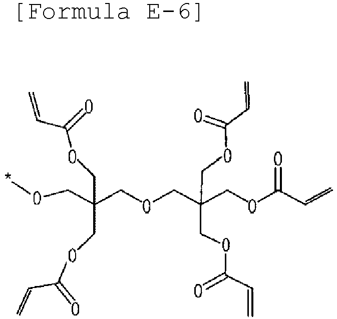

In an embodiment of the present invention, the polyalkylene carbonate-based polymer may be represented by Formula 1-1 or Formula 1-2 below, and preferably, may be represented by Formula 1-2 below.

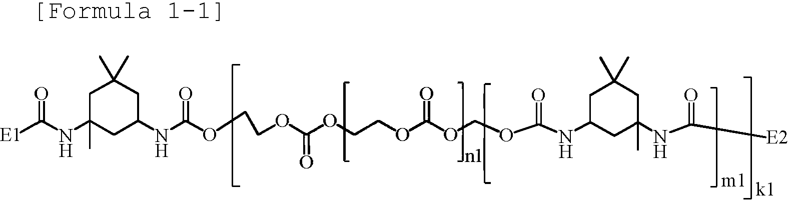

In Formula 1-1 above,
n1, m1, and k1 are repetition numbers, wherein
n1 is an integer of any one of 1 to 1,000,
m1 is an integer of any one of 1 to 1,000, and
k1 is an integer of any one of 1 to 100, and
E1 and E2 are the same as or different from each other and are each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group.

Specifically, the E1 and E2 may each be a vinyl group or a (meth)acrylate group, and more specifically, a (meth)acrylate group.

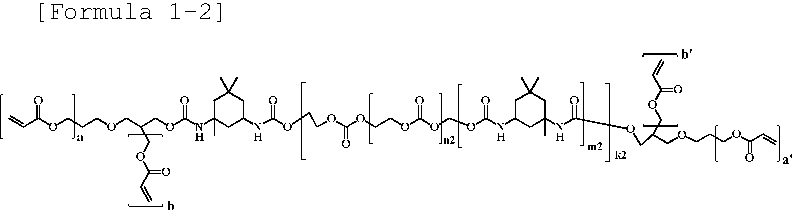

In Formula 1-2 above,
n2, m2, and k2 are repetition numbers, wherein
n2 is an integer of any one of 1 to 1,000,
m2 is an integer of any one of 1 to 1,000, and
k2 is an integer of any one of 1 to 100, and
a and a' are the same as or different from each other and are each independently an integer of any one of 1 to 3, and
b and b' are the same as or different from each other and are each independently an integer of 1 or 2.

In an embodiment of the present invention, the Formula 1-1 above may be represented by Formula 1-A below.

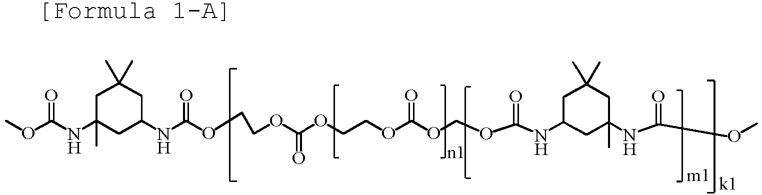

In Formula 1-A above,
definitions of n1, m1, and k1 are the same as defined in Formula 1-1 above.

In an embodiment of the present invention, n1 is an integer of any one of 2 to 100, m1 is an integer of any one of 2 to 100, and k1 is an integer of any one of 1 to 50.

In an embodiment of the present invention, n1 is an integer of any one of 5 to 20, m1 is an integer of any one of 5 to 20, and k1 is an integer of any one of 1 to 10.

In an embodiment of the present invention, the Formula 1-2 above may be represented by Formula 1-B below.

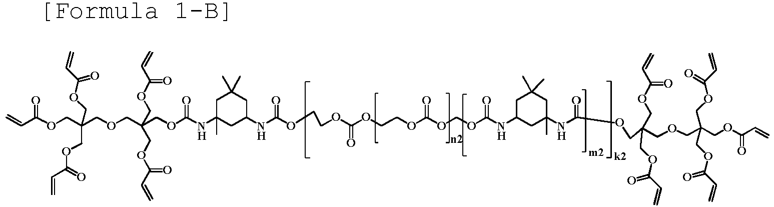

In Formula 1-B above,
definitions of n2, m2, and k2 are the same as defined in Formula 1-2 above.

The weight average molecular weight of the polyalkylene carbonate-based polymer is 1,000 g/mol to 1,500,000 g/mol, preferably 2,000 g/mol to 1,000,000 g/mol, and most preferably 2,000 g/mol to 10,000 g/mol. When the weight average molecular weight of the polyalkylene carbonate-based polymer is less than 1,000 g/mol, the affinity between a polymer and an electrode decreases, and the mechanical properties of a film derived from the polymer are degraded, and when greater than 1,500,000 g/mol, there is a problem in that it is difficult to be dissolved in an electrolyte solvent.

### (b) Additive

The composition for an electrolyte of the present invention may include lithium difluoro(oxalato)borate (LiODFB) and lithium bis(oxalato)borate (LiBOB) at a weight ratio of 1:5 to 5:1.

In this case, an electrochemical oxidation reaction occurs on the surface of a positive electrode, thereby forming a film of an inorganic component, so that an effect of protecting the positive electrode may be achieved to ultimately improve the durability of a battery. Specifically, when the weight of the LiBOB exceeds 5 times the weight of LiODFB, there is a problem in that a side reaction is caused during high-temperature storage, thereby increasing gas generation and intensifying resistance increase, and when the weight of the LiODFB exceeds 5 times the weight of LiBOB, there is a problem in that a positive electrode side reaction increases, thereby increasing initial resistance and decreasing capacity. The weight ratio of the LiODFB and LiBOB may preferably be 1:1 to 5:1, more preferably 3:1 to 5:1.

The amount of the LiODFB may be in a range of 0.1 wt% to 3 wt%, preferably 0.5 wt% to 1 wt%, based on the total weight of the composition for an electrolyte. In addition, the amount of the LiBOB may be in a range of 0.05 wt% to 1 wt%, preferably 0.2 wt% to 0.5 wt%, based on the total weight of the composition for an electrolyte.

When the amounts of LiODFB and LiBOB are in the above range, it is possible to form a sufficient electrode film during a formation process in the battery, and it is possible to prevent gas generation caused by unnecessary reactions. In addition, it is possible to prevent an appearance defect of the battery and swelling during high-temperature storage may be prevented.

In another embodiment of the present invention, the composition for an electrolyte includes a compound represented by Formula 3-1 below and a compound represented by Formula 3-2 below, and at this time, the amount of the compound represented by Formula 3-1 above is in a range of 0.01 wt% to 5 wt% based on the total weight of the composition for an electrolyte, and the amount of the compound represented by Formula 3-2 above is in a range of 0.01 wt% to 10 wt% based on the total weight of the composition for an electrolyte.

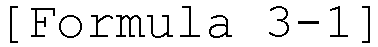

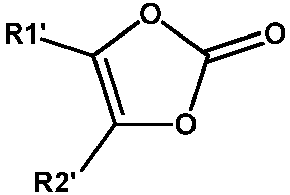

In Formula 3-1 above,
R1' and R2' are the same as or different from each other and are each independently hydrogen, or a vinyl group.

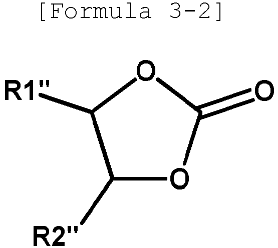

In Formula 3-2 above,
R1" and R2" are the same as or different from each other and are each independently hydrogen or a halogen group, and at least one of R1" and R2" is a halogen group.

When an electrolyte formed from the composition including the compound represented by Formula 3-1 above is used, a stable SEI layer may be formed on the surface of a negative electrode through an electrochemical decomposition reaction in the beginning of formation of a lithium secondary battery, so that a side reaction between the negative electrode and the electrolyte may be suppressed in the battery to prevent deterioration of the battery and improve the lifespan thereof. However, when the amount of the compound represented by Formula 3-1 above is less than 0.01 wt%, the input effect is insignificant, and when greater than 5 wt%, the reaction occurs excessively, thereby increasing gas generation to rather decrease the durability of the lithium secondary battery. Preferably, the amount of the compound represented by Formula 3-1 above may be in a range of 0.05 wt% to 4 wt%, more preferably 0.1 wt% to 3 wt% based on the total weight of the composition for an electrolyte.

In addition, the compound represented by Formula 3-2 above may remain after the formation and suppress the collapse of the SEI Layer on the surface of the negative electrode during the driving of the battery, and therefore, when the compound represented by Formula 3-1 above and the compound represented by Formula 3-2 above are used together, the SEI layer may be firmly maintained, so that there is an effect of improving the durability of the battery. However, when the amount of the second additive is less than 0.01 wt%, sufficient film formation may not occur on the surface of an electrode, so that the effect of improving lifespan may not be expected, and when greater than 10 wt%, the reaction occurs excessively, so that electrode interface resistance increases to rather decrease battery performance. Preferably, the amount of the compound represented by Formula 3-2 above may be in a range of 5 wt% to 10 wt%, more preferably 6 wt% to 8 wt% based on the total weight of the composition for an electrolyte.

In addition, the compound represented by Formula 3-1 above may be vinylene carbonate (VC) or vinyl ethylene carbonate (VEC), and the compound represented by Formula 3-2 above may be fluoroethylene carbonate (FEC).

The composition for an electrolyte of the present invention may optionally include the following other additives, if necessary, in order to prevent an electrolyte from decomposing in a high-voltage environment, thereby causing electrode collapse, or to further improve low-temperature high-rate discharge properties, high-temperature stability, overcharge prevention, the effect of suppressing battery expansion at high temperatures, and the like.

The other additives may be one or more selected from a sultone-based compound, a sulfate-based compound, a phosphate-based or phosphite-based compound, a borate-based compound, a nitrile-based compound, an amine-based compound, a silane-based compound, and a benzene-based compound.

The sultone-based compound is a material capable of forming a stable SEI film by a reduction reaction on the surface of a negative electrode, and may be one or more compounds selected from 1,3-propane sultone (PS), 1,4-butane sultone, ethene sulfone, 1,3-propene sultone (PRS), 1,4-butene sultone, and 1-methyl-1,3-propene sultone, and specifically, may be 1,3-propane sultone (PS).

The sulfate-based compound is a material which may be electrically decomposed on the surface of a negative electrode, thereby forming a stable SEI thin film which is not cracked even during high-temperature storage, and may be one or more selected from ethylene sulfate (Esa), trimethylene sulfate (TMS), or methyl trimethylene sulfate (MTMS).

The phosphate-based or phosphite-based compound may be one or more selected from tris(trimethyl silyl)phosphite, tris(2,2,2-trifluoroethyl)phosphate, and tris(trifluoroethyl)phosphite.

The borate-based compound may be lithium tetraphenylborate.

The nitrile-based compound may be one or more selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The amine-based compound may be one or more selected from triethanolamine and ethylenediamine, and the silane-based compound may be tetravinylsilane.

The benzene-based compound may be one or more selected from monofluorobenzene, difluorobenzene, trifluorobenzene, and tetrafluorobenzene.

Meanwhile, the amount of the other additives may be in a range of 0.1 wt% to 10 wt%, preferably 1 wt% to 5 wt%, based on the total weight of the composition for an electrolyte. When the amount of the other additive is less than 0.1 wt%, the effect of improving the low-temperature capacity of a battery as well as the high-temperature storage properties and high-temperature lifespan properties of the same is insignificant, and when greater than 10 wt%, there is a possibility in that side reactions in an electrolyte may excessively occur during charging and discharging of the battery. Particularly, when additives for forming the SEI film are added in excess, the additives may not be sufficiently decomposed at a high temperature, and thus, may be present as unreacted substances or precipitated in an electrolyte at room temperature. Accordingly, a side reaction causing the lifespan or resistance properties of the battery to degrade may occur.

### (c) Organic solvent

As the organic solvent, various organic solvents typically used in a lithium electrolyte may be used without limitation. For example, the organic solvent may include one or more selected from a cyclic carbonate-based solvent, a linear carbonate-based solvent, a cyclic carbonate-based solvent, a linear ester-based solvent, and a nitrile-based solvent, and preferably, may include a cyclic carbonate-based solvent and a linear ester-based solvent. When a cyclic carbonate-based solvent and a linear ester-based solvent are used together, it is preferable in that a suitable solvation sheath is formed in the process of dissociating lithium ions, thereby facilitating the dissociation of a lithium salt, the viscosity of an electrolyte decreases, thereby improving ion conductivity properties, and low-temperature ion conductivity increases, thereby improving low-temperature output properties and also increasing the stability at a high voltage, so that it is possible to improve battery lifespan.

The cyclic carbonate-based solvent is a high-viscosity organic solvent having a high dielectric constant, and thus, may dissociate a lithium salt well in the composition for an electrolyte, and may be one or more selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate. Among the above, in terms of ensuring high ion conductivity, ethylene carbonate (EC) and propylene carbonate (EC) may be included.

In addition, the linear carbonate-based solvent is a low-viscosity, low-dielectric constant organic solvent, and representative examples thereof may be one or more organic solvents selected from dimethyl carbonate (DMC), diethyl carbonate (DEC), dipropyl carbonate, ethylmethyl carbonate (EMC), methylpropyl carbonate, and ethylpropyl carbonate, and specifically, may include ethylmethyl carbonate (EMC).

The linear ester-based solvent may be at least one selected from the group consisting of methyl acetate, ethyl acetate, propyl acetate, methyl propionate (MP), ethyl propionate (EP), propyl propionate (PP), and butyl propionate (BP) and, specifically, may include ethyl propionate (EP) and propyl propionate (PP).

In addition, as the cyclic ester-based solvent, one or more selected from γ-butyrolactone, γ-valerolactone, γ-caprolactone, σ-valerolactone, and ε-caprolactone may be used.

When the linear ester-based solvent and/or the cyclic ester-based solvent are included as the organic solvent of the composition for an electrolyte, the stability may increase at high temperatures.

The nitrile-based solvent may be one or more selected from succinonitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and preferably, may be succinonitrile.

The remainder of the total weight of the composition for an electrolyte except for other components, for example, the lithium salt, the polyalkylene carbonate-based polymer, the additive, and a polymerization initiator to be described later, other than the organic solvent, may all be the organic solvent unless otherwise stated.

### (d) Lithium salt

As the lithium salt, any lithium salt typically used in an electrolyte for a lithium secondary battery may be used except for the lithium salt-based additive, and specifically, the lithium salt may be one or more selected from lithium hexafluorophosphate (LiPF₆), lithium bis(fluorosulfonyl)imide (LiFSI), and lithium bis(trifluoromethanesulfonyl)imide (LiTFSI), and preferably LiPF₆.

In an embodiment of the present invention, the concentration of the lithium salt in the composition for an electrolyte may be 0.1 M to 4.0 M, specifically 0.5 M to 3.0 M, and more specifically 0.8 M to 2.5 M. When the concentration of a lithium salt is in the above range, an effect of improving low-temperature output and improving cycle properties is sufficiently secured, and viscosity and surface tension are prevented from being excessively increased, so that suitable electrolyte impregnation properties may be obtained.

### (e) Polymerization initiator

The electrolyte for a lithium secondary battery of the present invention may further include a typical polymerization initiator known in the art, for example, one or more polymerization initiators selected from an azo-based compound and a peroxide-based compound. The polymerization initiator is to initiate a polymerization reaction of the polyalkylene carbonate-based polymer of the present invention.

The azo-based compound may be one or more selected from 2,2'-Aazobis(2-cyanobutane), dimethyl 2,2'-Azobis(2-methylpropionate), 2,2'-Azobis(methylbutyronitrile), 2,2'-Azobis(iso-butyronitrile) (AIBN), and 2,2'-AzobisdimethylValeronitrile (AMVN), but is not limited thereto.

The peroxide-based compound may be one or more selected from benzoyl peroxide, acetyl peroxide, dilauryl peroxide, di-tert-butyl peroxide, t-butyl peroxy-2-ethyl-hexanoate, cumyl hydroperoxide, and hydrogen peroxide, but is not limited thereto.

The polymerization initiator may be decomposed by heat, a non-limiting example thereof may be heat of 30°C to 100°C, or decomposed at room temperature (5°C to 30°C) to form a radical, and by free radial polymerization, the polyalkylene carbonate-based polymer may be reacted with an acrylate-based end group, for example, an end group represented by any one of Formulas E-1 to E-6, to form a gel polymer electrolyte.

The polymerization initiator may be included in an amount of 0.1 parts by weight to 5 parts by weight based on 100 parts by weight of the polyalkylene carbonate-based polymer. When the polymerization initiator is included in the above range, an amount of residual unreacted polymerization initiator may be minimized, and gelation may be achieved above a predetermined level.

### Gel polymer electrolyte

The present invention provides a gel polymer electrolyte for a lithium secondary battery including a polymerization product of the composition for an electrolyte of a lithium secondary battery, and specifically, the gel polymer electrolyte may be the polymerization product of the composition for an electrolyte. That is, the gel polymer electrolyte may include a polymer network formed by a polymerization reaction of the composition for an electrolyte. Specifically, the gel polymer electrolyte may be manufactured by injecting the composition for an electrolyte into a secondary battery and then curing the same by a thermal polymerization reaction. For example, the gel polymer electrolyte may be formed by in-situ polymerization of the composition for an electrolyte inside the secondary battery.

More specifically, the gel polymer electrolyte may be manufactured by
(a) inserting an electrode assembly composed of a positive electrode, a negative electrode, and a separator interposed between the positive electrode and the negative electrode into a battery case,
(b) injecting the composition of the present invention into the battery case,
(c) wetting and aging the electrode assembly, and
(d) polymerizing the composition to form a gel polymer electrolyte.

At this time, the in-situ polymerization reaction in the lithium secondary battery may be performed through an E-BEAM, gamma ray, a room-temperature/high-temperature aging process, and may be performed through thermal polymerization according to an embodiment of the present invention. At this time, the polymerization takes about 2 minutes to 24 hours, and the thermal polymerization temperature may be 50°C to 100°C, specifically 60°C to 80°C.

More specifically, the gel polymer electrolyte of the present invention may be manufactured by injecting the composition for an electrolyte into a battery cell, followed by sealing the injection port, and performing thermal polymerization of heating at about 60°C to 80°C for an hour to 20 hours.

### Lithium secondary battery

Next, a lithium secondary battery according to the present invention will be described.

The lithium secondary battery according to the present invention includes a positive electrode including a positive electrode active material, a negative electrode including a negative electrode active material, a separator interposed between the positive electrode and the negative electrode, and the gel polymer electrolyte for a lithium secondary battery described above. The gel polymer electrolyte for a lithium secondary battery has been described above, and thus, the description thereof will be omitted, and hereinafter, the other components will be described.

### (a) Positive electrode

The positive electrode may be manufactured by coating a positive electrode mixture slurry including a positive electrode active material, a binder, a conductive material, a solvent, and the like on a positive electrode current collector.

The positive electrode current collector is not particularly limited as long as it has conductivity without causing a chemical change in the battery. For example, stainless steel, aluminum, nickel, titanium, fired carbon, or aluminum or stainless steel that is surface-treated with one of carbon, nickel, titanium, silver, and the like may be used.

The positive electrode active material is a compound capable of reversible intercalation and de-intercalation of lithium, and may be one or more selected from the group consisting of LCO (LiCoO₂), LNO (LiNiO₂), LMO (LiMnO₂), LiMn₂O₄, LiCoPO₄, LFP (LiFePO₄), and LiNi_{1-x-y-z}CoₓM¹_{y}M²_{z}O₂ (M¹ and M² are each independently any one selected from the group consisting of Al, Ni, Co, Fe, Mn, V, Cr, Ti, W, Ta, Mg, and Mo, and x, y and z are each independently an atomic fraction of an oxide composition element, wherein 0≤x<0.5, 0≤y<0.5, 0≤z<0.5, and x+y+z=1) including LiNiMnCoO₂, LiNiCoMnO₂ (NMC), and the like.

Specifically, the positive electrode active material may include a lithium metal oxide containing one or more metals such as cobalt, manganese, nickel, or aluminum and lithium.

More specifically, the lithium metal oxide may be a lithium-manganese-based oxide such as LiMnO₂, LiMnO₃, LiMn₂O₃, and LiMn₂O₄, a lithium-cobalt-based oxide such as LiCoO₂, a lithium-nickel-based oxide such as LiNiO₂, a lithium-nickel-manganese-based oxide such as LiNi_{1-Y}Mn_{Y}O₂ (0<Y<1), LiMn_{2-z}Ni_{z}O₄ (0<Z<2), a lithium-nickel-cobalt-based oxide such as LiNi_{1-Y1}Co_{Y1}O₂ (0<Y1<1), a lithium-manganese-cobalt-based oxide such as LiCo_{1-Y2}Mn_{Y2}O₂ (0<Y2<1) and LiMn_{2-z1}Co_{z1}O₄ (0<z1<2), a lithium-nickel-manganese-cobalt-based oxide such as Li(NiₚCo_{q}Mnᵣ₁)O₂ (0 <p<1, 0<q<1, 0<r1<1, p+q+r1=1) and Li(Niₚ₁Co_{q1}Mnᵣ₂)O₄ (0<p1 <2, 0<q1<2, 0<r2<2, p1+q1+r2=2), and a lithium-nickel-cobalt-transition metal (M) oxide such as Li(Niₚ₂Co_{q2}Mnᵣ₃M_{S2})O₂ (wherein M is selected from the group consisting of Al, Fe, V, Cr, Ti, Ta, Mg, and Mo, and p2, q2, r3, and S2 are each an atomic fraction of independent elements, wherein 0<p2<1, 0< q2<1, 0<r3<1, 0<S2<1, p2+q2+r3+S2=1).

Among these, due to the fact that the capacity and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, etc.), or a lithium nickel cobalt aluminum oxide (e.g., Li(Ni_{0.8}Co_{0.15}Al_{0.05})O₂, etc.). When considering the effect of remarkable improvement according to the type and content ratio control of constituent elements forming a lithium metal oxide, the lithium metal oxide may be one or more selected from Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.3}Mn_{0.1}Co_{0.1})O₂.

The positive electrode active material may be included in an amount of 60 wt% to 99 wt%, preferably 70 wt% to 99 wt%, and more preferably 80 wt% to 99 wt% based on the total weight of solids excluding the solvent in the positive electrode mixture slurry.

The binder is a component for assisting in coupling between an active material and a conductive material, and coupling to a current collector.

Examples of the binder may include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, styrene-butadiene rubber (SBR), fluorine rubber, and various copolymers thereof.

Typically, the binder may be included in an amount of 1 wt% to 20 wt%, preferably 1 wt% to 15 wt%, and more preferably 1 wt% to 10 wt% based on the total weight of solids excluding the solvent in the positive electrode mixture slurry.

The conductive material is a component for further improving the conductivity of a positive electrode active material.

The conductive material is not particularly limited as long as it has conductivity without causing a chemical change in the battery, and for example, graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative may be used.

Typically, the conductive material may be included in an amount of 1 wt% to 20 wt%, preferably 1 wt% to 15 wt%, and more preferably 1 wt% to 10 wt% based on the total weight of solids excluding the solvent in the positive electrode mixture slurry.

The solvent may include an organic solvent such as N-methyl-2-pyrrolidone (NMP), and may be used in an amount such that a preferred viscosity is achieved when the positive electrode active material, and optionally, a binder, a conductive material, and the like are included. For example, the solvent may be included in an amount such that the concentration of solids including the positive electrode active material, and optionally, a binder and a conductive material, is 50 wt% to 95 wt%, preferably 50 wt% to 80 wt%, more preferably 55 wt% to 70 wt%.

### (b) Negative electrode

The negative electrode may be prepared by coating a negative electrode slurry including a negative electrode active material, a binder, a conductive material, a solvent, and the like on a negative electrode current collector, followed by drying and roll-pressing.

The negative electrode current collector typically has a thickness of 3 µm to 500 µm. The negative electrode current collector is not particularly limited as long as it has high conductivity without causing a chemical change in the battery, and for example, copper; stainless steel; aluminum; nickel; titanium; fired carbon, copper or stainless steel that is surface-treated with one of carbon, nickel, titanium, silver, and the like, an aluminum-cadmium alloy, or the like may be used. Also, as in the case of the positive electrode current collector, microscopic irregularities may be formed on the surface of the negative electrode current collector to improve the coupling force of a negative electrode active material, and the negative electrode current collector may be used in various forms of such as a film, a sheet, a foil, a net, a porous body, a foam body, and a non-woven fabric body.

In addition, the negative electrode active material may include one or more selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide.

As the carbon material capable of reversible intercalation/de-intercalation of lithium ions, a carbon-based negative electrode active material commonly used in a lithium ion secondary battery may be used without particular limitation, and representative examples thereof may include a crystalline carbon, an amorphous carbon, or a combination thereof. Examples of the crystalline carbon may include graphite such as an irregular, planar, flaky, spherical, or fibrous natural graphite or artificial graphite, and examples of the amorphous carbon may include soft carbon (low-temperature fired carbon) or hard carbon, mesophase pitch carbides, fired cokes, and the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium may be used.

As the metal composite oxide, one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, Li_{X}Fe₂O₃ (0≤X≤1), Li_{X}WO₂ (0≤X≤1), and SnₓMe_{1-X}Me'_{Y}O_{z} (Me: Mn, Fe, Pb, Ge; Me': an element each in Group 1, Group 2, and Group 3 of the periodic table, halogen; 0<X≤1; 1≤Y≤3; 1≤z≤8).

The material capable of doping and undoping lithium may be Si, SiOₓ (0<x≤2), an Si-Y alloy (wherein Y is an element selected from the group consisting of an alkali metal, an alkaline earth metal, a Group 13 element, a Group 14 element, a transition metal, a rare earth element, and a combination thereof, but not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, but not Sn), and the like, or at least one thereof may be mixed with SiO₂ and used. The element Y may be selected from the group consisting of Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may be a lithium-containing titanium composite oxide (LTO), a vanadium oxide, a lithium vanadium oxide, and the like.

In the present invention, the negative electrode active material is preferably graphite.

The negative electrode active material may be included in an amount of 60 wt% to 99 wt%, preferably 70 wt% to 99 wt%, and more preferably 80 wt% to 99 wt% based on the total weight of solids excluding the solvent in a negative electrode mixture slurry.

The binder is a component for assisting in coupling between a conductive material, an active material, and a current collector. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, styrene-butadiene rubber (SBR), fluorine rubber, and various copolymers thereof.

Typically, the binder may be included in an amount of 1 wt% to 20 wt%, preferably 1 wt% to 15 wt%, and more preferably 1 wt% to 10 wt% based on the total weight of solids excluding the solvent in the negative electrode mixture slurry.

The conductive material is a component for further improving the conductivity of a negative electrode active material. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; conductive fiber such as carbon fiber and metal fiber; metal powder such as fluorocarbon powder, aluminum powder, and nickel powder; a conductive whisker such as zinc oxide and potassium titanate; a conductive metal oxide such as titanium oxide; and a conductive material such as a polyphenylene derivative may be used.

The conductive material may be included in an amount of 1 wt% to 20 wt%, preferably 1 wt% to 15 wt%, and more preferably 1 wt% to 10 wt% based on the total weight of solids excluding the solvent in the negative electrode mixture slurry.

The solvent may include water; or an organic solvent such as N-methyl-2-pyrrolidone (NMP), and may be used in an amount such that a preferred viscosity is achieved when the negative electrode active material, and optionally, a binder, a conductive material, and the like are included. For example, the solvent may be included in an amount such that the concentration of solids including the negative electrode active material, and optionally, a binder and a conductive material, is 50 wt% to 95 wt%, preferably 50 wt% to 95 wt%, preferably 70 wt% to 90 wt%.

When a metal itself is used as the negative electrode, the negative electrode may be manufactured by physically bonding, roll-pressing, or depositing a metal on a metal thin film itself or the negative electrode current collector. The depositing method may be electrical vapor deposition or chemical vapor deposition.

For example, the metal bonded/roll-pressed/deposited on the metal thin film itself or the negative electrode current collector may be one type of metal selected from the group consisting of nickel (Ni), tin (Sn), copper (Cu), and indium (In), or an alloy of two types of metals thereof.

### (c) Separator

The lithium secondary battery according to the present invention includes a separator between the positive electrode and the negative electrode.

The separator is to separate the negative electrode and the positive electrode and to provide a movement path for lithium ions, and any separator may be used without particular limitation as long as it is a separator commonly used in a secondary battery. Particularly, a separator having excellent electrolyte impregnation as well as low resistance to ion movement in the electrolyte is preferable.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of glass fiber having a high melting point, polyethylene terephthalate fiber, or the like may be used. Also, a separator including or coated with a ceramic component or a polymer material in the form of a film, fiber, or powder may be used to secure heat resistance or mechanical strength, and may be used in a single-layered or a multi-layered structure.

The lithium secondary battery according to the present invention as described above may be usefully used in portable devices such as a mobile phone, a notebook computer, and a digital camera, and in electric cars such as a hybrid electric vehicle (HEV).

Accordingly, the lithium secondary battery may be included in a battery module as a unit cell, and the battery module may be included in a battery pack.

The battery module or the battery pack may be used as a power source of one or more medium-and-large-sized devices, for example, a power tool, an electric car including an electric vehicle (EV), a hybrid electric vehicle, and a plug-in hybrid electric vehicle (PHEV), and a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell in a medium-and-large-sized battery module including a plurality of battery cells.

Hereinafter, the present invention will be described in detail with reference to specific examples.

### MODE FOR CARRYING OUT THE INVENTION

### Example 1

### (1) Preparation of composition for electrolyte

LiPF₆ of 1.0 M, 0.5 wt% of a polyalkylene carbonate-based polymer (Mw: 3,000 g/mol, n2=10, m2=10, k2=2) represented by Formula 1-B below, 0.5 wt% of LiODFB, 0.5 wt% of LiBOB, 0.4 wt% of 2,2'-Azobis(2,4-dimethylvaleronitrile) (V-65, Wako Co., Ltd.), and the remainder of an organic solvent were mixed to prepare a total of 100 wt% of a composition for an electrolyte. At this time, as the organic solvent, a mixed non-aqueous organic solvent including ethylene carbonate (EC):propylene carbonate (PC):ethyl propionate (EP):propyl propionate (PP) at a volume ratio of 20:10:25:45 was used.

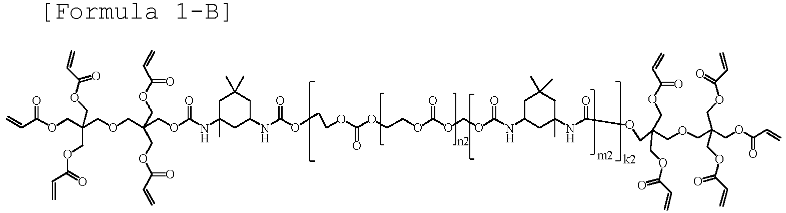

### (2) Manufacturing of secondary battery

To a N-methyl-2-pyrrolidone (NMP) solvent, LiCoO₂ as a positive electrode active material, carbon black as a conductive material, and polyvinylidene fluoride (PVdF) as a binder were respectively added in an amount of 96 parts by weight, 2 parts by weight, and 2 parts by weight to prepare a positive electrode mixed slurry. The positive electrode mixed slurry was applied to an aluminum (Al) thin film having a thickness of about 20 µm, which is a positive electrode current collector, dried and then roll pressed to manufacture a positive electrode.

Graphite as a negative electrode active material, styrene-butadiene rubber (SBR) as a binder, CMC as a thickener, and carbon black as a conductive material were mixed at a weight ratio of 96.3:1:1.5:1.2, and then added to the NMP solvent to prepare a negative electrode mixture slurry. The negative electrode mixture slurry was applied on a copper (Cu) thin film having a thickness of about 10 µm, which is a negative electrode current collector, dried and then roll pressed to manufacture a negative electrode.

The positive electrode, the negative electrode, and a separator composed of 3 layers of polypropylene/polyethylene/polypropylene (PP/PE/PP) were used to manufacture an electrode assembly, and then electrode assembly was placed in a battery case, followed by injecting 120 mL of the above-prepared composition for an electrolyte to the case, sealing the case, and then performing aging for 2 days. Thereafter, by performing curing at 60°C for 5 hours, thereby performing a thermal polymerization reaction, a pouch-type lithium secondary battery including the gel polymer electrolyte was manufactured.

### Example 2

A lithium secondary battery was manufactured in the same manner as in Example 1 except that in the preparation process of the composition for an electrolyte of Example 1, the amount of the polyalkylene carbonate-based polymer was changed to 5 wt%.

### Example 3

A lithium secondary battery was manufactured in the same manner as in Example 2 except that in the preparation process of the composition for an electrolyte of Example 2, 1 wt% of LiODFB and 0.2 wt% of LiBOB were used.

### Example 4

A lithium secondary battery was manufactured in the same manner as in Example 1 except that in the preparation process of the composition for an electrolyte of Example 1, LiODFB and LiBOB were not added, and instead, 2 wt% of vinylene carbonate (VC) and 7 wt% of fluoroethylene carbonate (FEC) were added.

### Example 5

A lithium secondary battery was manufactured in the same manner as in Example 4 except that in the preparation process of the composition for an electrolyte of Example 4, the amount of the polyalkylene carbonate-based polymer was changed to 5 wt%.

### Comparative Example 1

A lithium secondary battery was manufactured in the same manner as in Example 1 except that in the preparation process of the composition for an electrolyte of Example 1, the polyalkylene carbonate-based polymer, LiODFB, and LiBOB were not included.

### Comparative Example 2

A lithium secondary battery was manufactured in the same manner as in Example 2 except that in the preparation process of the composition for an electrolyte of Example 2, LiODFB and LiBOB were not included.

### Comparative Example 3

A lithium secondary battery was manufactured in the same manner as in Example 2 except that in the preparation process of the composition for an electrolyte of Example 2, LiODFB was not included.

### Comparative Example 4

The same was performed in the same manner as in Example 3 except that in the preparation process of the composition for an electrolyte of Example 3, a polymer (n2=10, m2=10, k2=1,000 in Formula 1-B above) having a weight average molecular weight (Mw) of 2,000,000 g/mol was used as the polyalkylene carbonate-based polymer, but the polyalkylene carbonate-based polymer was not dissolved, so that it was not possible to manufacture an electrolyte.

### Comparative Example 5

A lithium secondary battery was manufactured in the same manner as in Example 4 except that in the preparation process of the composition for an electrolyte of Example 4, FEC was not included.

### Comparative Example 6

A lithium secondary battery was manufactured in the same manner as in Example 4 except that in the preparation process of the composition for an electrolyte of Example 4, VC was not included.

### Comparative Example 7

The same was performed in the same manner as in Example 5 except that in the preparation process of the composition for an electrolyte of Example 5, a polymer (n2=10, m2=10, k2=1,000 in Formula 1-B above) having a weight average molecular weight (Mw) of 2,000,000 g/mol was used as the polyalkylene carbonate-based polymer, but the polyalkylene carbonate-based polymer was not dissolved, so that it was not possible to manufacture an electrolyte.

### Comparative Example 8

A lithium secondary battery was manufactured in the same manner as in Example 1 except that in the preparation process of the composition for an electrolyte of Example 1, 0.1 wt% of LiODFB and 1 wt% of LiBOB were used.

### Comparative Example 9

A lithium secondary battery was manufactured in the same manner as in Example 4 except that in the preparation process of the composition for an electrolyte of Example 4, the amount of VC was changed to 7 wt%.

### Comparative Example 10

A lithium secondary battery was manufactured in the same manner as in Example 4 except that in the preparation process of the composition for an electrolyte of Example 4, the amount of FEC was changed to 11 wt%.

### <Experimental Examples>

### Experimental Example 1: Thermal safety evaluation

The lithium secondary batteries prepared in Examples 1 to 5 and Comparative Example 1 were heated to 150°C at a temperature raising rate of 5°C/min in a full-charged state of SOC 100% (4.45V), and then each thereof was left to stand for one hour to conduct a hot box evaluation experiment to determine whether ignition occurred.

The results are shown in Table 1 below, and when the battery was ignited, it was denoted by PASS, when not ignited, it was denoted by FAIL.

**[Table 1]**

| | Polymer | | Additive | | | | Experimental Example 1 |
|---|---|---|---|---|---|---|---|
| | Molecular weight (g/mol) | Amount in composition (wt%) | LiODFB (wt%) | LiBOB (wt%) | VC (wt%) | FEC (wt%) | Thermal safety evaluation results |
| Example 1 | 3,000 | 0.5 | 0.5 | 0.5 | - | - | PASS |
| Example 2 | 3,000 | 5 | 0.5 | 0.5 | - | - | PASS |
| Example 3 | 3,000 | 5 | 1 | 0.2 | - | - | PASS |
| Example 4 | 3,000 | 0.5 | - | - | 2 | 7 | PASS |
| Example 5 | 3,000 | 5 | - | - | 2 | 7 | PASS |
| Comparative Example 1 | - | - | - | - | - | - | FAIL |

Referring to the results of Table 1 above, it can be seen that when the polyalkylene carbonate-based polymer according to the present invention and two or more types of additives are used together, thermal safety is ensured.

### Experimental Example 2-1: Lifespan properties evaluation (high temperature)

The lithium secondary batteries manufactured in Examples 1 to 3, Comparative Examples 1 to 3, and Comparative Example 8 were each subjected to a formation process at 25°C at a 0.2 C rate, and gas in the batteries was removed through a degas process, and the degassed lithium secondary batteries were subjected to, at a temperature of 45°C, constant current/constant voltage (CC/CV) charge to 4.45 V at a 0.7 C rate and 0.05 C cut-off charge, and then were subjected to constant current (CC) discharge to 3.0 V at a 0.5 C rate.

Performing the charge/discharge once each was set as 1 cycle, and after performing 100 cycles, the capacity retention rate compared to the capacity at the initial state (1 cycle) was measured, and is shown in Table 2 below. Meanwhile, the charge/discharge process was performed using the PNE-0506 charger/discharger (Manufacturer: PNE solution).

### Experimental Example 2-2: Lifespan properties evaluation (capacity retention rate after high-temperature storage)

The lithium secondary batteries manufactured in Examples 1 to 3, Comparative Examples 1 to 3, and Comparative Example 8 were subjected to a formation process at a 0.2 C rate. Thereafter, gas in the batteries was removed through a degas process, and the degassed batteries were subjected to 1 cycle of being charged to 4.45 V and 0.05 C cut-off at room temperature (25°C) at a 0.2 C rate under the constant current/constant voltage conditions, and then discharged to 3.0 V at a 0.2 C rate to obtain an initial discharge capacity. At this time, the charge and discharge process was performed using the PNE-0506 charger/discharger (Manufacturer: PNE solution).

Thereafter, the batteries were charged with constant current/constant voltage to 4.45 V and 0.05 C cut-off at room temperature (25°C) at a 0.7 C rate, and then in the state of SOC 100%, the batteries were left to stand for 8 hours in an oven (OF-02GW, manufacturer: JEIO Tech) of 85°C to be stored at a high temperature. Thereafter, the batteries were taken out at room temperature, cooled for 24 hours, and then using the above charger/discharger, were subjected to 3 cycles of constant current/constant voltage charge to 4.45 V and 0. 05 C cut-off at a 0.7 C rate, and 3.0 V cut-off discharge at a 0.2 C rate to measure a discharge capacity of the last third cycle. The obtained discharge capacity is shown in a percentage (%) with respect to the initial discharge capacity and is shown in Table 2 below.

**[Table 2]**

| | Polymer | | Additive | | Experimental Example 2-1 | Experimental Example 2-2 |
|---|---|---|---|---|---|---|
| | Molecular weight (g/mol) | Amount in composition (wt%) | LiODFB (wt%) | LiBOB (wt%) | High temperature 100 times capacity retention rate (%) | Capacity retention rate (%) after high-temperature storage |
| Example 1 | 3,000 | 0.5 | 0.5 | 0.5 | 94 | 97 |
| Example 2 | 3,000 | 5 | 0.5 | 0.5 | 95 | 98 |
| Example 3 | 3,000 | 5 | 1 | 0.2 | 96 | 99 |
| Comparative Example 1 | - | - | - | - | 91 | 95 |
| Comparative Example 2 | 3,000 | 5 | - | - | 88 | >70 |
| Comparative Example 3 | 3,000 | 5 | - | 0.5 | 90 | >80 |
| Comparative Example 8 | 3,000 | 0.5 | 0.1 | 1 | 90 | 88 |

Referring to the results of Table 2 above, it can be seen that when the polyalkylene carbonate-based polymer according to the present invention and LiODFB and LiBOB are used together, excellent lifespan properties may be ensured. Through that Examples 1 to 3 have excellent high-temperature properties compared to Comparative Example 8, it can be seen that there is a difference in effect depending on the weight ratio of LiODFB and LiBOB, and particularly, it can be confirmed that when the weight ratio of LiODFB and LiBOB is 5:1, that is, when LiODFB is included more, the most excellent performance may be obtained. When the ratio of LiBOB is too high as in Comparative Example 8, the positive electrode film may rather collapse at a high temperature due to positive electrode side reaction.

Meanwhile, it can be confirmed that Comparative Example 1 in which the polyalkylene carbonate-based polymer and the additive were not included, a case (Comparative Example 2) in which the polyalkylene carbonate-based polymer was included, but the additive was not included, and a case (Comparative Example 3) in which only LiBOB was used have poor high-temperature performance compared to that of Examples 1 o 3.

### Experimental Example 3-1: Lifespan properties evaluation (room temperature)

The lithium secondary batteries manufactured in Examples 4 and 5, and Comparative Examples 1, 5, 6, 9, and 10 were subjected to, at a temperature of 25°C, constant current/constant voltage (CC/CV) charge to 4.45 V at a 0.7 C rate and 0.05 C cut-off charge, and then were subjected to constant current (CC) discharge to 3.0 V at a 0.5 C rate.

Performing the charge/discharge once each was set as 1 cycle, and after performing 100 cycles, the capacity retention rate compared to the capacity at the initial state (1 cycle) was measured, and is shown in Table 3 below. Meanwhile, the charge/discharge process was performed using the PNE-0506 charger/discharger (Manufacturer: PNE solution).

### Experimental Example 3-2: Lifespan properties evaluation (low temperature)

The lithium secondary batteries manufactured in Examples 4 and 5, and Comparative Examples 1, 5, 6, 9, and 10 were subjected to, at a temperature of 0°C, constant current/constant voltage (CC/CV) charge to 4.45 V at a 0.7 C rate and 0.05 C cut-off charge, and then were subjected to constant current (CC) discharge to 3.0 V at a 0.5 C rate.

Performing the charge/discharge once each was set as 1 cycle, and after performing 50 cycles, the capacity retention rate compared to the capacity at the initial state (1 cycle) was measured, and is shown in Table 3 below. Meanwhile, the charge/discharge process was performed using the PNE-0506 charger/discharger (Manufacturer: PNE solution).

**[Table 3]**

| | Polymer | | Additive | | Experimental Example 3-1 | Experimental Example 3-2 |
|---|---|---|---|---|---|---|
| | Molecular weight (g/mol) | Amount in composition (wt%) | VC (wt%) | FEC (wt%) | Room temperature 100 times capacity retention rate (%) | Low temperature 50 times capacity retention rate (%) |
| Example 4 | 3,000 | 0.5 | 2 | 7 | 95 | 90 |
| Example 5 | 3,000 | 5 | 2 | 7 | 96 | 89 |
| Comparative Example 1 | - | - | - | - | 90 | 85 |
| Comparative Example 5 | 3,000 | 5 | 2 | - | 92 | 80 |
| Comparative Example 6 | 3,000 | 5 | - | 7 | 91 | 82 |
| Comparative Example 9 | 3,000 | 0.5 | 7 | 7 | 91 | 75 |
| Comparative | 3,000 | 0.5 | 2 | 11 | 85 | 90 |
| Example 10 | | | | | | |

Referring to the results of Table 3 above, it can be seen that when the polyalkylene carbonate-based polymer according to the present invention, the compound represented by Formula 3-1 above, and the compound represented by Formula 3-2 above are used together, thermal safety and excellent lifespan properties are simultaneously ensured.

Meanwhile, it can be confirmed that Comparative Example 1 in which the polyalkylene carbonate-based polymer and the compounds represented by Formula 3-1 and 3-2 were not included and Comparative Examples 5 and 6 in which the polyalkylene carbonate-based polymer was included but only one of the compounds represented by Formula 3-1 and 3-2 was included have poor high-temperature and low-temperature performance compared to that of Examples.

In addition, in the case of Comparative Example 9 in which the compound represented by Formula 3-1 was used in excess, the thickness of a negative electrode film was excessively increased, thereby degrading ion transfer properties, so that it can be confirmed that lifespan properties, lifespan at low temperatures in particular, are significantly reduced.

The compound represented by Formula 3-2 above is vulnerable to gas generation, and thus, when the compound is present in excess, it can be confirmed that lifespan properties are degraded due to gas generated during a charging and discharging process.

## Claims

1. A composition for an electrolyte of a lithium secondary battery, comprising:
a lithium salt;
a polyalkylene carbonate-based polymer including a unit represented by Formula 1 below and having a weight average molecular weight of 1,000 g/mol to 1,500,000 g/mol, as measured using the method set out in the description; and
an organic solvent;
wherein, in addition, the composition either includes lithium difluoro(oxalato)borate and lithium bis(oxalato)borate at a weight ratio of 1:5 to 5:1, or includes a compound represented by Formula 3-1 below in an amount of 0.01 wt% to 5 wt% and a compound represented by Formula 3-2 below in an amount of 0.01 wt% to 10 wt% based on the total weight of the composition: 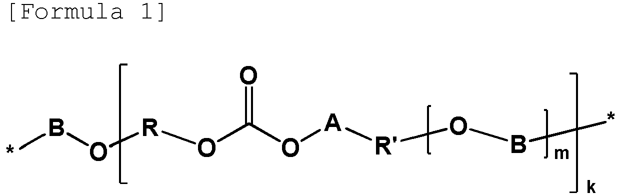
wherein in Formula 1 above,
R and R' are the same as or different from each other and are each independently an alkylene group having 1 to 5 carbon atoms,
A is a unit represented by Formula 2 below,
B is a unit including one or more amide groups,
* is a site connected to a main chain or an end group of a polymer, and
m and k are repetition numbers, wherein:
m is an integer of any one of 1 to 1,000, and
k is an integer of any one of 1 to 100; 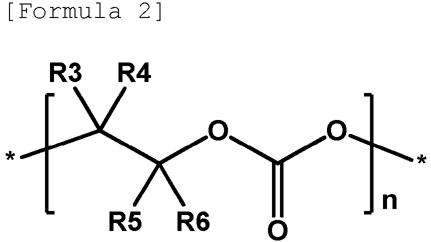
wherein in Formula 2 above,
R3 to R6 are the same as or different from each other and are each independently hydrogen or an alkyl group having 1 to 5 carbon atoms,
* is a site connected to a main chain or an end group of a polymer, and
n is a repetition number and an integer of any one of 1 to 1,000; 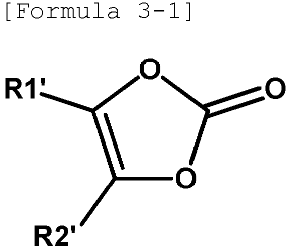
wherein in Formula 3-1 above,
R1' and R2' are the same as or different from each other and are each independently hydrogen or a vinyl group; 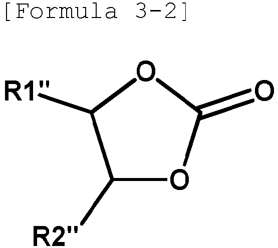
wherein in Formula 3-2 above,
R1" and R2" are the same as or different from each other and are each independently hydrogen or a halogen group, wherein at least one of R1" and R2" is a halogen group.

2. The composition of claim 1, wherein the B of Formula 1 above is represented by Formula B-1 below: 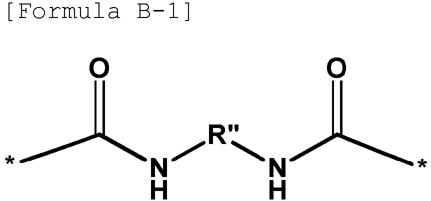 wherein in Formula B-1 above,
R" is a substituted or unsubstituted alkylene group having 1 to 10 carbon atoms, a substituted or unsubstituted cycloalkylene group having 3 to 10 carbon atoms, a substituted or unsubstituted bicycloalkylene group having 6 to 20 carbon atoms, or a substituted or unsubstituted arylene group having 6 to 20 carbon atoms.

3. The composition of claim 1, wherein the polyalkylene carbonate-based polymer is represented by Formula 1-1 or Formula 1-2 below: 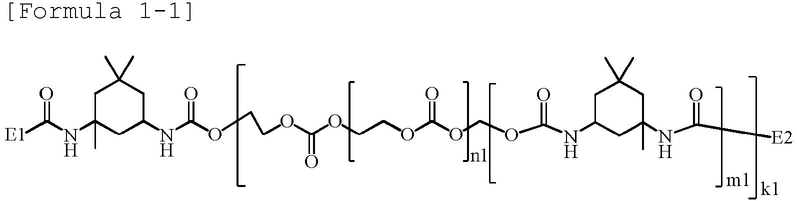 wherein in Formula 1-1 above,
n1, m1 and k1 are repetition numbers, wherein:
n1 is an integer of any one of 1 to 1,000,
m1 is an integer of any one of 1 to 1,000, and
k1 is an integer of any one of 1 to 100, and
E1 and E2 are the same as or different from each other and are each independently an alkyl group, an alkoxy group, a hydroxyl group, an aldehyde group, an ester group, a halogen group, a halide group, a vinyl group, a (meth)acrylate group, a carboxyl group, a phenyl group, an amine group, an amide group, or a sulfonyl group; 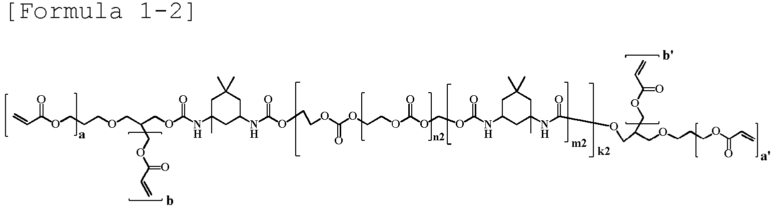
wherein in Formula 1-2 above,
n2, m2, and k2 are repetition numbers, wherein:
n2 is an integer of any one of 1 to 1,000,
m2 is an integer of any one of 1 to 1,000, and
k2 is an integer of any one of 1 to 100,
a and a' are the same as or different from each other and are each independently an integer of any one of 1 to 3, and
b and b' are the same as or different from each other and are each independently an integer of 1 or 2.

4. The composition of claim 1, wherein the amount of the polyalkylene carbonate-based polymer is 0.1 wt% to 5 wt% based on the total weight of the composition.

5. The composition of claim 1, wherein the weight ratio of the lithium difluoro(oxalato)borate and the lithium bis(oxalato)borate is in a range of 1:1 to 5:1.

6. The composition of claim 1, wherein the amount of the lithium difluoro(oxalato)borate is in a range of 0.1 wt% to 3 wt% based on the total weight of the composition.

7. The composition of claim 1, wherein the amount of the lithium bis(oxalato)borate is in a range of 0.05 wt% to 1 wt% based on the total weight of the composition.

8. The composition of claim 1, wherein the amount of the lithium bis(oxalato)borate is in a range of 0.2 wt% to 0.5 wt% based on the total weight of the composition.

9. The composition of claim 1, wherein the amount of the compound represented by Formula 3-2 above is in a range of 5 wt% to 10 wt% based on the total weight of the composition.

10. The composition of claim 1, wherein the organic solvent comprises a cyclic carbonate-based solvent and a linear ester-based solvent.

11. The composition of claim 1, wherein the composition further comprises a polymerization initiator.

12. A gel polymer electrolyte for a lithium secondary battery comprising a polymerization product of the composition of claim 1.

13. A lithium secondary battery comprising:
a positive electrode including a positive electrode active material;
a negative electrode including a negative electrode active material;
a separator interposed between the positive electrode and the negative electrode; and
the gel polymer electrolyte of claim 12.

## Patentansprüche

1. Zusammensetzung für einen Elektrolyten einer Lithium-Sekundärbatterie, umfassend:
ein Lithiumsalz;
ein Polymer auf Polyalkylencarbonat-Basis, umfassend eine durch die nachstehende Formel 1 dargestellte Einheit und aufweisend ein gewichtsgemitteltes Molekulargewicht von 1.000 g/mol bis 1.500.000 g/mol, gemessen unter Verwendung des in der Beschreibung angegebenen Verfahrens; und
ein organisches Lösungsmittel;
worin die Zusammensetzung zusätzlich entweder Lithiumdifluor(oxalato)borat und Lithiumbis(oxalato)borat in einem Gewichtsverhältnis von 1:5 bis 5:1 umfasst, oder eine durch die nachstehende Formel 3-1 dargestellte Verbindung in einer Menge von 0,01 Gew.-% bis 5 Gew.-% und eine durch die nachstehende Formel 3-2 dargestellte Verbindung in einer Menge von 0,01 Gew.-% bis 10 Gew.-% umfasst, bezogen auf das Gesamtgewicht der Zusammensetzung: 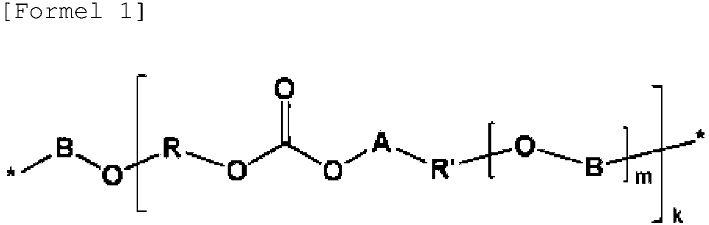
worin in der vorstehenden Formel 1
R und R' gleich oder voneinander verschieden sind und jeweils unabhängig eine Alkylengruppe mit 1 bis 5 Kohlenstoffatomen sind,
A eine durch die nachstehende Formel 2 dargestellte Einheit ist,
B eine Einheit ist, die eine oder mehr Amidgruppen umfasst,
* eine Stelle ist, die mit einer Hauptkette oder einer Endgruppe eines Polymers verknüpft, und
m und k Wiederholungszahlen sind, worin:
m eine ganze Zahl von 1 bis 1.000 ist und
k eine ganze Zahl von 1 bis 100 ist; 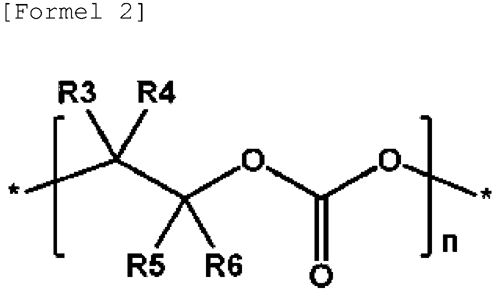
worin in der vorstehenden Formel 2
R3 bis R6 gleich oder voneinander verschieden sind und jeweils unabhängig Wasserstoff oder eine Alkylgruppe mit 1 bis 5 Kohlenstoffatomen sind,
* eine Stelle ist, die mit einer Hauptkette oder einer Endgruppe eines Polymers verknüpft, und
n eine Wiederholungszahl ist und eine ganze Zahl von irgendeinem von 1 bis 1.000 ist; 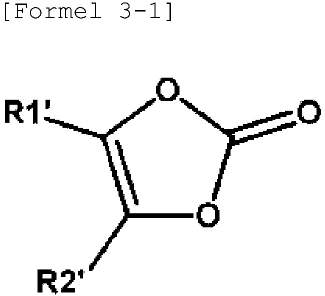
worin in der vorstehenden Formel 3-1
R1' und R2' gleich oder voneinander verschieden sind und jeweils unabhängig Wasserstoff oder eine Vinylgruppe sind; 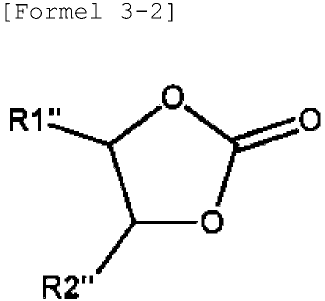
worin in der vorstehenden Formel 3-2
R1" und R2" gleich oder voneinander verschieden sind und jeweils unabhängig Wasserstoff oder eine Halogengruppe sind, worin zumindest eines von R1" und R2" eine Halogengruppe ist.

2. Zusammensetzung gemäß Anspruch 1, worin B der vorstehenden Formel 1 durch die nachstehende Formel B-1 dargestellt ist: 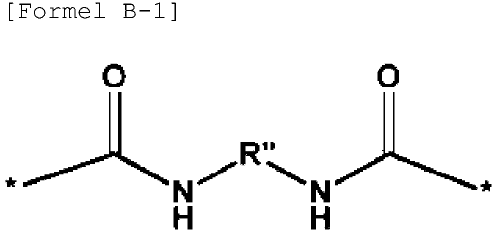 worin in der vorstehenden Formel B-1
R" eine substituierte oder unsubstituierte Alkylengruppe mit 1 bis 10 Kohlenstoffatomen, eine substituierte oder unsubstituierte Cycloalkylengruppe mit 3 bis 10 Kohlenstoffatomen, eine substituierte oder unsubstituierte Bicycloalkylengruppe mit 6 bis 20 Kohlenstoffatomen oder eine substituierte oder unsubstituierte Arylengruppe mit 6 bis 20 Kohlenstoffatomen ist.

3. Zusammensetzung gemäß Anspruch 1, worin das Polymer auf Polyalkylencarbonat-Basis durch die nachstehende Formel 1-1 oder die Formel 1-2 dargestellt ist: 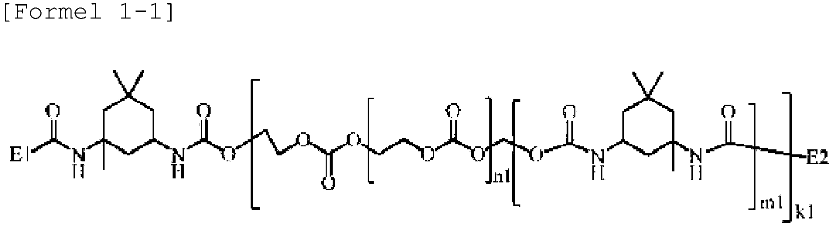 worin in der vorstehenden Formel 1-1
n1, m1 und k1 Wiederholungszahlen sind, worin:
n1 eine ganze Zahl von irgendeinem von 1 bis 1.000 ist,
m1 eine ganze Zahl von irgendeinem von 1 bis 1.000 ist und
k1 eine ganze Zahl von irgendeinem von 1 bis 100 ist und
E1 und E2 gleich oder voneinander verschieden sind und jeweils unabhängig eine Alkylgruppe, eine Alkoxygruppe, eine Hydroxylgruppe, eine Aldehydgruppe, eine Estergruppe, eine Halogengruppe, eine Halogenidgruppe, eine Vinylgruppe, eine (Meth)acrylatgruppe, eine Carboxylgruppe, eine Phenylgruppe, eine Amingruppe, eine Amidgruppe oder eine Sulfonylgruppe sind; 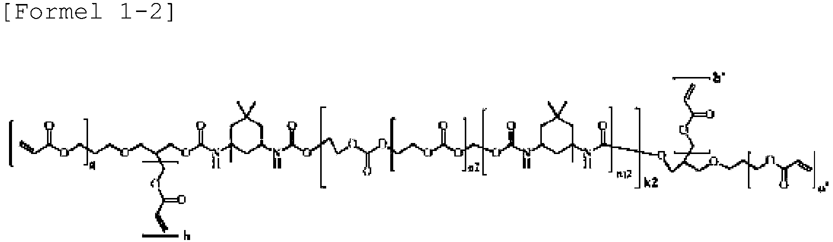
worin in der vorstehenden Formel 1-2
n2, m2 und k2 Wiederholungszahlen sind, worin:
n2 eine ganze Zahl von irgendeinem von 1 bis 1.000 ist,
m2 eine ganze Zahl von irgendeinem von 1 bis 1.000 ist und
k2 eine ganze Zahl von irgendeinem von 1 bis 100 ist,
a und a' gleich oder voneinander verschieden sind und jeweils unabhängig eine ganze Zahl von irgendeinem von 1 bis 3 sind und
b und b' gleich oder voneinander verschieden sind und jeweils unabhängig eine ganze Zahl von 1 oder 2 sind.

4. Zusammensetzung gemäß Anspruch 1, worin die Menge des Polymers auf Polyalkylencarbonat-Basis 0,1 Gew.-% bis 5 Gew.-% beträgt, bezogen auf das Gesamtgewicht der Zusammensetzung.

5. Zusammensetzung gemäß Anspruch 1, worin das Gewichtsverhältnis von Lithiumdifluor(oxalato)borat und Lithiumbis(oxalato)borat im Bereich von 1:1 bis 5:1 liegt.

6. Zusammensetzung gemäß Anspruch 1, worin die Menge von Lithiumdifluor(oxalato)borat im Bereich von 0,1 Gew.-% bis 3 Gew.-% liegt, bezogen auf das Gesamtgewicht der Zusammensetzung.

7. Zusammensetzung gemäß Anspruch 1, worin die Menge von Lithiumbis(oxalato)borat im Bereich von 0,05 Gew.-% bis 1 Gew.-% liegt, bezogen auf das Gesamtgewicht der Zusammensetzung.

8. Zusammensetzung gemäß Anspruch 1, worin die Menge von Lithiumbis(oxalato)borat im Bereich von 0,2 Gew.-% bis 0,5 Gew.-% liegt, bezogen auf das Gesamtgewicht der Zusammensetzung.

9. Zusammensetzung gemäß Anspruch 1, worin die Menge der durch die vorstehende Formel 3-2 dargestellten Verbindung im Bereich von 5 Gew.-% bis 10 Gew.-% liegt, bezogen auf das Gesamtgewicht der Zusammensetzung.

10. Zusammensetzung gemäß Anspruch 1, worin das organische Lösungsmittel ein Lösungsmittel auf cyclischer Carbonat-Basis und ein Lösungsmittel auf linearer Ester-Basis umfasst.

11. Zusammensetzung gemäß Anspruch 1, worin die Zusammensetzung ferner einen Polymerisationsinitiator umfasst.

12. Gel-Polymer-Elektrolyt für eine Lithium-Sekundärbatterie, umfassend ein Polymerisationsprodukt der Zusammensetzung gemäß Anspruch 1.

13. Lithium-Sekundärbatterie, umfassend:
eine positive Elektrode, die ein Positivelektroden-Aktivmaterial umfasst;
eine negative Elektrode, die ein Negativelektroden-Aktivmaterial umfasst;
einen zwischen der positiven Elektrode und der negativen Elektrode vorgesehenen Separator; und
den Gel-Polymer-Elektrolyten gemäß Anspruch 12.

## Revendications

1. Composition pour un électrolyte de batterie secondaire au lithium, comprenant :
un sel de lithium ;
un polymère à base de polycarbonate d'alkylène incluant une unité représentée par la Formule 1 ci-dessous et présentant une masse moléculaire moyenne en poids de 1 000 g/mol à 1 500 000 g/mol, telle que mesurée en utilisant la méthode exposée dans la description; et
un solvant organique ;
dans laquelle, en outre, la composition inclut soit du difluoro(oxalato)borate de lithium et du bis(oxalato)borate de lithium dans un rapport en poids de 1:5 à 5:1, soit inclut un composé représenté par la Formule 3-1 ci-dessous en une quantité de 0,01 % en poids à 5 % en poids et un composé représenté par la Formule 3-2 ci-dessous en une quantité de 0,01 % en poids à 10 % en poids sur la base du poids total de la composition : 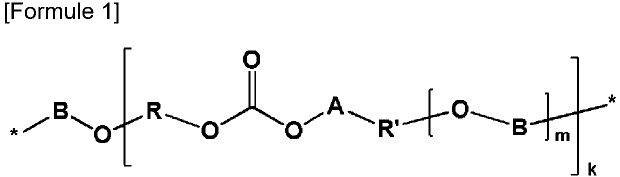
dans laquelle, dans la Formule 1 ci-dessus,
R et R' sont identiques les uns aux autres ou différents les uns des autres et sont chacun indépendamment un groupe alkylène présentant 1 à 5 atomes de carbone,
A est une unité représentée par la Formule 2 ci-dessous,
B est une unité incluant un ou plusieurs groupes amide,
* est un site relié à la chaîne principale ou à un groupe terminal d'un polymère, et
m et k sont des nombres d'unités répétitives, dans lesquels :
m est un nombre entier de l'un quelconque de 1 à 1 000, et
k est un nombre entier de l'un quelconque de 1 à 100 ; 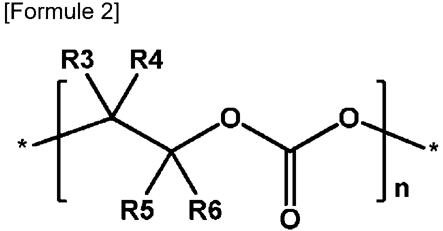
dans laquelle, dans la Formule 2 ci-dessus,
R3 à R6 sont identiques les uns aux autres ou différents les uns des autres et sont chacun indépendamment un hydrogène ou un groupe alkyle présentant 1 à 5 atomes de carbone,
* est un site relié à la chaîne principale ou à un groupe terminal d'un polymère, et
n est un nombre d'unités répétitives et un nombre entier de l'un quelconque de 1 à 1 000 ; 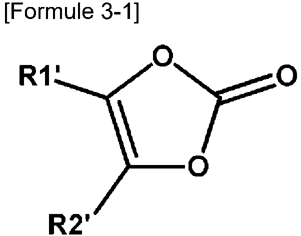
dans laquelle, dans la Formule 3-1 ci-dessus,
R1' et R2' sont identiques les uns aux autres ou différents les uns des autres et sont chacun indépendamment un hydrogène ou un groupe vinyle ; 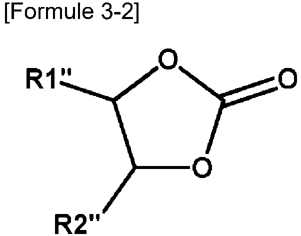
dans laquelle, dans la Formule 3-2 ci-dessus,
R1" et R2" sont identiques les uns aux autres ou différents les uns des autres et sont chacun indépendamment un hydrogène ou un groupe halogène, dans lesquels au moins un de R1" et R2" est un groupe halogène.

2. Composition selon la revendication 1, dans laquelle le B de la Formule 1 ci-dessus est représenté par la Formule B-1 ci-dessous : 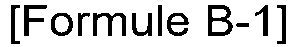 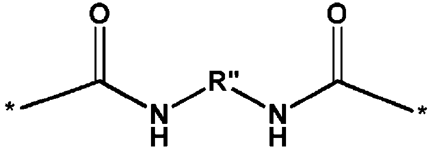 dans laquelle, dans la Formule B-1 ci-dessus,
R" est un groupe alkylène substitué ou non substitué présentant 1 à 10 atomes de carbone, un groupe cycloalkylène substitué ou non substitué présentant 3 à 10 atomes de carbone, un groupe bicycloalkylène substitué ou non substitué présentant 6 à 20 atomes de carbone, ou un groupe arylène substitué ou non substitué présentant 6 à 20 atomes de carbone.

3. Composition selon la revendication 1, dans laquelle le polymère à base de polycarbonate d'alkylène est représenté par la Formule 1-1 ou la Formule 1-2 ci-dessous : 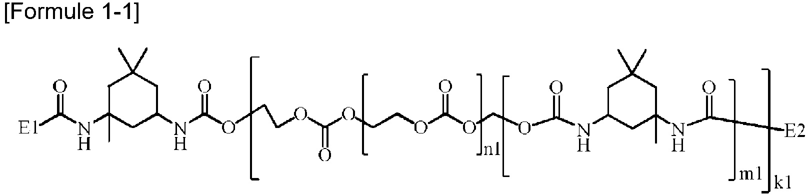 dans laquelle, dans la Formule 1-1 ci-dessus,
n1, m1 et k1 sont des nombres d'unités répétitives, dans lesquels :
n1 est un nombre entier de l'un quelconque de 1 à 1 000,
m1 est un nombre entier de l'un quelconque de 1 à 1 000, et
k1 est un nombre entier de l'un quelconque de 1 à 100, et
E1 et E2 sont identiques les uns aux autres ou différents les uns des autres et sont chacun indépendamment un groupe alkyle, un groupe alcoxy, un groupe hydroxyle, un groupe aldéhyde, un groupe ester, un groupe halogène, un groupe halogénure, un groupe vinyle, un groupe (méth)acrylate, un groupe carboxyle, un groupe phényle, un groupe amine, un groupe amide, ou un groupe sulfonyle ; 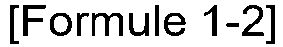 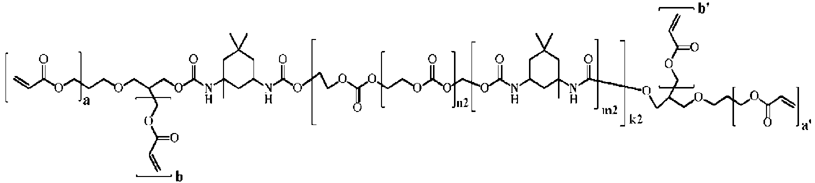
dans laquelle, dans la Formule 1-2 ci-dessus,
n2, m2, et k2 sont des nombres d'unités répétitives, dans lesquels :
n2 est un nombre entier de l'un quelconque de 1 à 1 000,
m2 est un nombre entier de l'un quelconque de 1 à 1 000, et
k2 est un nombre entier de l'un quelconque de 1 à 100,
a et a' sont identiques les uns aux autres ou différents les uns des autres et sont chacun indépendamment un nombre entier de l'un quelconque de 1 à 3, et
b et b' sont identiques les uns aux autres ou différents les uns des autres et sont chacun indépendamment un nombre entier de 1 ou 2.

4. Composition selon la revendication 1, dans laquelle la quantité du polymère à base de polycarbonate d'alkylène est de 0,1 % en poids à 5 % en poids sur la base du poids total de la composition.

5. Composition selon la revendication 1, dans laquelle le rapport en poids du difluoro(oxalato)borate de lithium et du bis(oxalato)borate de lithium est dans une plage de 1:1 à 5:1.

6. Composition selon la revendication 1, dans laquelle la quantité du difluoro(oxalato)borate de lithium est dans une plage de 0,1 % en poids à 3 % en poids sur la base du poids total de la composition.

7. Composition selon la revendication 1, dans laquelle la quantité du bis(oxalato)borate de lithium est dans une plage de 0,05 % en poids à 1 % en poids sur la base du poids total de la composition.

8. Composition selon la revendication 1, dans laquelle la quantité du bis(oxalato)borate de lithium est dans une plage de 0,2 % en poids à 0,5 % en poids sur la base du poids total de la composition.

9. Composition selon la revendication 1, dans laquelle la quantité du composé représenté par la Formule 3-2 ci-dessus est dans une plage de 5 % en poids à 10 % en poids sur la base du poids total de la composition.

10. Composition selon la revendication 1, dans laquelle le solvant organique comprend un solvant à base de carbonate cyclique et un solvant à base d'ester linéaire.

11. Composition selon la revendication 1, dans laquelle la composition comprend en outre un initiateur de polymérisation.

12. Électrolyte polymère en gel pour une batterie secondaire au lithium comprenant un produit de polymérisation de la composition selon la revendication 1.

13. Batterie secondaire au lithium comprenant :
une électrode positive incluant un matériau actif d'électrode positive ;
une électrode négative incluant un matériau actif d'électrode négative ;
un séparateur interposé entre l'électrode positive et l'électrode négative ; et
l'électrolyte polymère en gel selon la revendication 12.
